(19) **Europäisches Patentamt**

**European Patent Office**

**Office européen des brevets**

(11) Publication number : **0 516 437 A2**

# (12) EUROPEAN PATENT APPLICATION

(21) Application number : **92304871.4**

(22) Date of filing : **28.05.92**

(51) Int. Cl.⁵ : **G11C 29/00**

(30) Priority : **29.05.91 JP 124208/91**

(43) Date of publication of application :
**02.12.92 Bulletin 92/49**

(84) Designated Contracting States :
**DE FR GB**

(71) Applicant : **NEC CORPORATION**
**7-1, Shiba 5-chome Minato-ku**
**Tokyo 108-01 (JP)**

(72) Inventor : **Tadokoro, Naoaki, c/o NEC**
**Communication Sys., Ltd.**
**4-28 , Mita 1-chome, Minato-ku**
**Tokyo (JP)**

(74) Representative : **Orchard, Oliver John**
**JOHN ORCHARD & CO. Staple Inn Buildings**
**North High Holborn**
**London WC1V 7PZ (GB)**

(54) **Write error detecting hardware arrangement.**

(57)     An arrangement for detecting an error in writing data into a memory is disclosed. A data flow direction controller is responsive to a control signal applied thereto and allows data to be written, via a data terminal, into the memory during a preset time duration of a write cycle. The controller then steers the data, which corresponds to the data stored in the memory and which appears at the data terminal, to a data comparator in response to an error check timing signal which appears during a second preset time duration of the write cycle. The data comparator is therefore supplied with the original write data and the data already stored during the presence of the error check timing signal and produces a signal indicative of the error during the second preset time duration, in the event that the original write data does not coincide with the data indicative of what has been stored in response thereto.

**FIG. 3**

The present invention relates generally to a hardware arrangement for detecting an error in writing data into a memory, and more specifically to such an arrangement which features write error detection during each write cycle.

## Description of the Prior Art

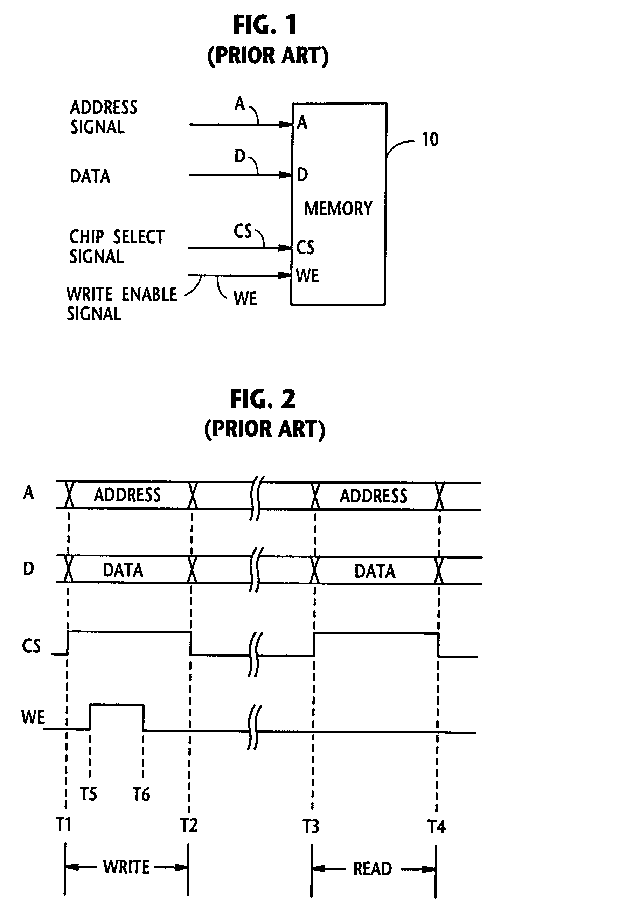

Before turning to the present invention it is deemed advantageous to briefly discuss known read/write operations with reference to Figs. 1 and 2.

Fig. 1 is a diagram which schematically shows a memory 10 with four terminals depicted by A, D, CS and WE. Merely for the sake of convenience, signals and data and lines, which are relevant to the corresponding terminals A, D, CS and WE, are denoted by like characters.

A chip select signal CS is applied to the input terminal CS for selecting the memory 10 by assuming a high level "1" during time durations T1-T2 and T3-T4 (Fig. 2). A write enable signal WE permits the memory 10 to store data D into the memory 10 while it assumes a high level (T5-T6 (Fig. 2)). Data applied from an external circuit (not shown) is stored in the memory 10 at a location which is specified by an address signal A.

Similarly, data is read out of the memory 10 from the storage location, which is designated by the address signal A, during a read cycle (T3-T4). In this case, the signals CS and WE are respectively high and low ("1" and "0").

The above mentioned prior art, however, is unable to check for a data write error during the same write cycle the data is written into memory. That is, the prior art is unable to ascertain correct data storage at the time when data is written into the memory.

## SUMMARY OF THE INVENTION

It is an object of the present invention to provide a hardware arrangement for checking to see if data is correctly written into a memory within the same write cycle as the data is written.

In brief, the above object is achieved by an arrangement wherein a data flow direction controller is responsive to a control signal applied thereto and allows data to be written, via a data terminal, into the memory during a preset time duration of a write cycle. The controller then steers the data, which corresponds to the data stored in the memory and which appears at the data terminal, to a data comparator in response to an error check timing signal which appears during a second preset time duration of the write cycle. The data comparator is therefore supplied with the original write data and the data already stored during the presence of the error check timing signal and produces a signal indicative of the error during the second preset time duration, in the event that the original write data does not coincide with the data indicative of what has been stored in response thereto.

In one embodiment, a circuit is provided which is responsive to a write enable signal and which generates the control signal and error check timing signals using the same.

## BRIEF DESCRIPTION OF THE DRAWINGS

The features and advantages of the present invention will become more clearly appreciated from the following description taken in conjunction with the accompanying drawings in which like elements are denoted by like reference numerals and in which:

Fig. 1 is a block diagram showing the known data write operations which are performed with no write error detection, and which was referred to in the opening paragraphs of the instant disclosure;

Fig. 2 is a timing chart depicting the operations of the arrangement shown in Fig, 1;

Fig. 3 is 3 block diagram showing a first embodiment of the present invention;

Fig. 4 is a timing chart depicting the operations of the arrangement of Fig. 3;

Fig. 5 is a block diagram showing a second embodiment of the present invention; and

Fig. 6 is a timing chart depicting the operations of the arrangement shown in Fig. 5.

## DETAILED DESCRIPTION OF THE PREFERRED EMBODIMENTS

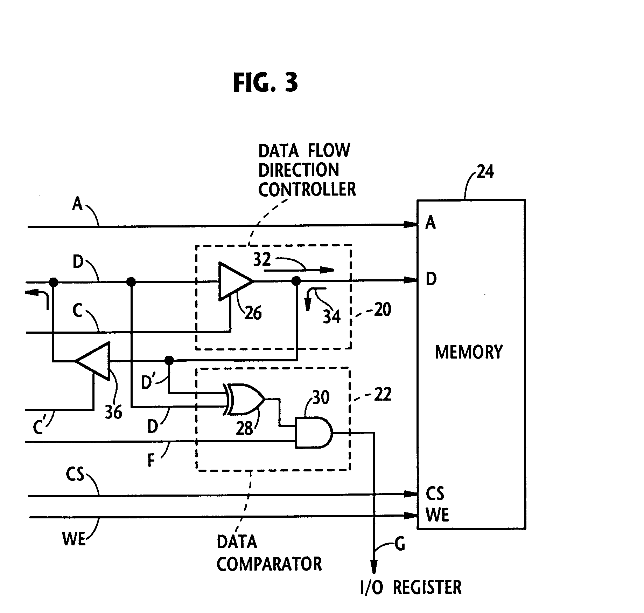

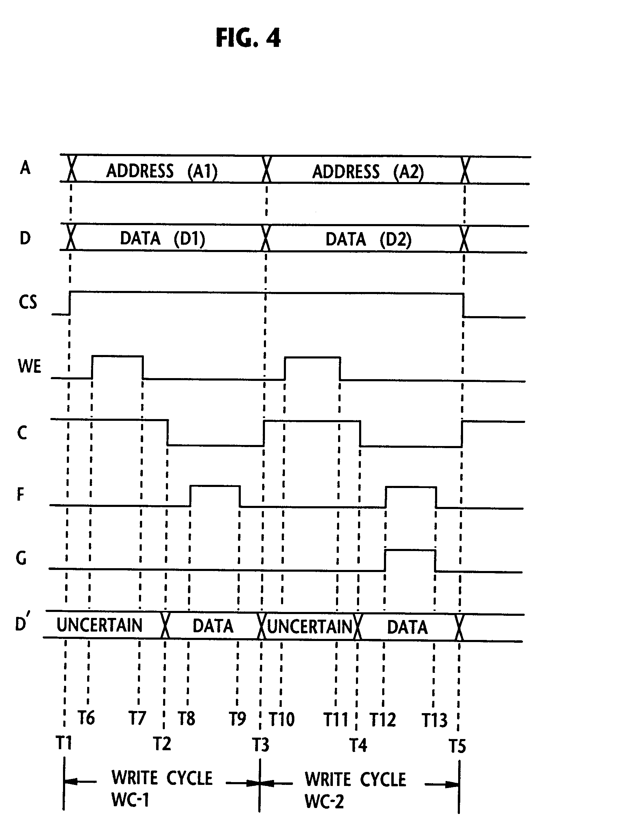

The first embodiment of the present invention will be discussed with reference to Figs. 3 and 4.

The arrangement shown in Fig. 3 includes a data flow direction controller 20, a data comparator 22, a memory 24 and a buffer 36. The memory 24 is identical with the memory 10 of Fig. 1.

The blocks 20, 22 operate in combination as a data write error detector. The data flow direction controller 20 is a buffer 26 which allows data D to be written into the memory 10, as indicated by a line 32, when a control signal C is high (viz., "1"). In this instance the data D is applied from an external circuit (not shown). The data comparator 22 includes an exclusive OR gate 28 and an AND gate 30. The exclusive OR gate 28 is arranged to receive two data D and D'.

The data D' corresponds to the data D which has already been stored in the memory 24 and is applied therefrom along a line 34 while the control signal C is low.

More specifically, the buffer 26 steers the data D', which corresponds to the date D stored in the memory 24 and which is present at the data terminal D, to the data comparator 22 during the same write cycle. These operations will further be discussed later with reference to the timing chart of Fig. 4.

The AND gate 30 receives the output of the exclusive OR gate 28 and a write error check timing signal F and outputs a write error detect signal G which is usually applied to an I/O (input/output) register (not shown).

The buffer 36 is provided for reading data from the memory 24. During a read cycle, a control signal C′ assumes a high level and hence the data derived from the memory 24 passes through the buffer 36 and flows to the external circuit via the data line D. The control signal C′ remains low except for a read cycle. The present invention is not concerned with the data read and hence no further description thereof is deemed unnecessary.

The Fig. 3 arrangement is configured in a manner to read or write a single bit merely for sake of simplifying the description. However, it is within the scope of the present invention to expand the present invention to the write error detection of 8-bit or 16-bit data (for example). In the case where 8-bit length data are subject to write error detection, eight exclusive OR gates and two groups of eight buffers are arranged in parallel in lieu of the exclusive OR gate 28 and the buffer 26, 36, respectively.

The operations of the Fig. 3 arrangement will further be discussed with reference to the timing chart of Fig. 4. In the operations described below, the control signal C′ for data reading remains low and thus the buffer 36 acts like an open circuit.

Fig. 4 shows two consecutive write cycles WC-1 and WC-2. If a write error is detected within one or both of the cycles, the error detect signal G assumes a high level for a predetermined time duration. In this embodiment, it is assumed that a write error is found only during the write cycle WC-2, and thus the signal G is high during T12-T13.

As shown, the chip select signal CS is high during the cycles WC-1 and WC-2 (T1-T5). Data D1 applied from the external circuit, is written into the memory 24 during a time period wherein the signals WE and C are both high (T6-T7). The storage location of the data D1 is designated by an address A1. The data D′, which is supplied from the memory location denoted by A1, is not specified (viz., uncertain) during T1-T2. During the time duration wherein the control signal C is low (T2-T3), the data D1 which has been stored at the memory location designated by the address A1, flows to the exclusive OR gate 28.

While the write error check timing signal F is high (T8-T9), and the output of the exclusive OR gate 28 is low, the AND gate 30 issues a low level. This indicates the absence of a write error.

On the contrary, if the output of the exclusive OR gate 28 is high, the AND gate 30 issues a high level which indicates the presence of a write error. In other words, if the data D and D′ assumes different logic levels, the error detect signal G becomes high and indicates the presence of a write error.

As indicated above, there exists no write error during the cycle WC-1. However, the error detect signal G assumes a high level during T12-T13 within the write cycle WC-2. The operations during the write cycle WC-2 is identical with those discussed in connection with the cycle WC-1 except that: (a) data D2 is written into the memory location designated by an address A2 and (b) the signal G assumes a high level during T12-T13.

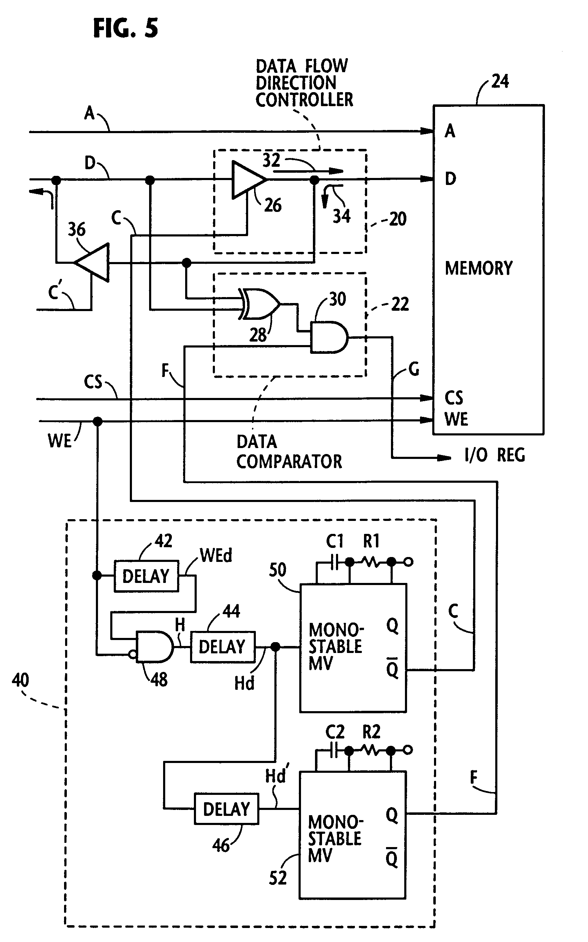

Fig. 5 is a block diagram showing a second embodiment of the present invention. This embodiment features an arrangement which renders in unnecessary for the control signal C and the write error check timing signal F to be applied from an external circuit.

The Fig. 5 arrangement further includes a signal generator 40. In brief, the signal generator 40 is supplied with the write enable signal WE and outputs the two signals C and F.

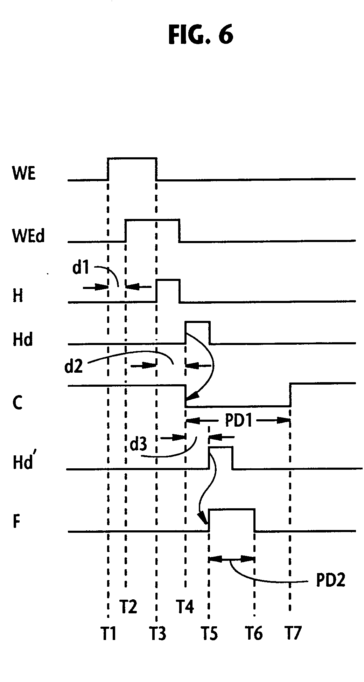

The signal generator 40 includes three delay circuits 42, 44 and 46, an AND gate 48 and two monostable multivibrators 50, 52, all of which are coupled as shown. An external R-C combination consisting of resistor R1 and capacitor C1, is provided to determine a quasi-stable state period of the monostable multivibrator 50 (viz., T4-T7 (Fig. 6)). Similarly, an external R-C combination consisting of resistor R2 and capacitor C2, determines a quasi-stable period of the monostable multivibrator 52 (viz., T5-T6 (Fig. 6)).

The operations of the signal generator 40 will be described with reference to Fig. 6. The AND gate 48 receives the write enable signal WE and the same signal WE which has been delayed at the delay circuit 42 by d1 (T1-T2)(denoted by WEd). The AND gate 48 outputs a signal H which is then delayed by d2 at the delay circuit 44 (T3-T4)(denoted by Hd). The monostable 50 responds to the signal Hd and produces the control signal C with a pulse width PD1 determined by the external R-C combination. The signal Hd is further delayed at the delay circuit 46 by d3 (T4-T5)(denoted by Hd′). The monostable multivibrator 52 is responsive to the signal Hd′ and generates the write error checking timing signal F with a pulse width PD2 determined by the external R-C combination. The signals C and F thus produced, are respectively applied to the buffer 26 and the exclusive OR gate 28 as in the first embodiment.

As mentioned above, the second embodiment does not require the supply of the signals C and F from the external circuit coupled thereto. Accordingly, this embodiment can be readily incorporated into conventional arrangements without the need to separately generate signals C and F.

It will be understood that the above disclosure is representative of two possible embodiments of the present invention and that the concept on which the present invention is based is not specifically limited thereto.

## Claims

1. An arrangement for detecting an error in writing data into a memory, comprising:

   first means which is responsive to a control signal applied thereto and which allows first data to be written, via a data terminal, into said memory during a first time duration of a write cycle, and for obtaining second data, which is indicative of said first date stored in said memory and which appears on said data terminal, during a second time duration of said write cycle; and

   second means which is supplied with said first and second data and an error check timing signal during said second time duration, said second means comparing said first and second data using said error check timing signal and outputting a signal indicative of the error during said second time duration in the event that the first data does not coincide with the second data.

2. An arrangement as claimed in claim 1, wherein said first means is a buffer which selectively allows said first data to pass therethrough in a direction to said memory in response to said control signal.

3. An arrangement as claimed in claim 1, wherein said second means includes:

   an exclusive OR gate to which said first and second data are inputted; and

   an AND gate which is coupled to receive the output of said exclusive OR gate and said error check timing signal.

4. An arrangement as claimed in claim 1, further comprising:

   a signal generator which receives a write enable signal and generates said control signal and error check timing signal using said write enable signal.

5. An arrangement for detecting an error in writing data into a memory, comprising:

   first means which is responsive to a control signal applied thereto and allows first data to be written, via a data terminal, into said memory during a first time duration of a write cycle, said first means obtaining second data, which corresponds to said first date stored in said memory and which appears at said data terminal, during a second time duration of said write cycle;

   second means which is supplied with said first and second data and an error check timing signal during said second time duration, said second means comparing said first and second data using said error check timing signal and outputting a signal indicative of the error during said second time duration in the event that the first data does not coincide with the second data; and

   third means which receives a write enable signal and generates said control signal and error check timing signal using said write enable signal.

6. An arrangement as claimed in claim 5, wherein said first means is a buffer which selectively allows said first data to pass therethrough in a direction to said memory in response to said control signal.

7. An arrangement as claimed in claim 5, wherein said second means includes:

   an exclusive OR gate to which said first and second data are inputted; and

   an AND gate which is coupled to receive the output of said exclusive OR gate and said error check timing signal.

# FIG. 1
## (PRIOR ART)

ADDRESS
SIGNAL

DATA

CHIP SELECT
SIGNAL

WRITE ENABLE
SIGNAL

A

D

CS

WE

A

D

MEMORY

CS

WE

10

# FIG. 2
## (PRIOR ART)

A   ADDRESS   ADDRESS

D   DATA   DATA

CS

WE

T5   T6

T1   T2   T3   T4

WRITE   READ

# FIG. 3

DATA FLOW
DIRECTION
CONTROLLER

24

A

A

D

32

D

26

34

20

C

MEMORY

36

D'

C'

D

30

22

28

F

CS

CS
WE

WE

DATA
COMPARATOR

G

I/O REGISTER

# FIG. 4

# FIG. 5

# FIG. 6